# EUROPÄISCHE PATENTSCHRIFT

(11) **EP 3 622 322 B1**
(45) Veröffentlichungstag und Bekanntmachung des Hinweises auf die Patenterteilung: **02.03.2022**
(21) Anmeldenummer: 18722046.2
(22) Anmeldetag: 04.05.2018
(51) Int. Cl.: G01S 17/10, G01S 17/42, G01S 7/481

(54) **LASERSCANNER FÜR EIN LIDAR-SYSTEM UND VERFAHREN ZUM BETREIBEN EINES LASERSCANNERS**
LASER SCANNER FOR A LIDAR SYSTEM AND METHOD FOR OPERATING A LASER SCANNER
SCANNER LASER POUR UN SYSTÈME LIDAR ET PROCÉDÉ DE FAIRE FONCTIONNER UN SCANNER LASER

(30) Priorität: 11.05.2017 DE 102017207947
(43) Veröffentlichungstag der Anmeldung: 18.03.2020
(73) Patentinhaber: Robert Bosch GmbH, 70442 Stuttgart (DE)
(72) Erfinder: GREINER, Alexander, 73262 Reichenbach (DE)
(86) Internationale Anmeldenummer: PCT/EP2018/061485
(87) Internationale Veröffentlichungsnummer: WO 2018/206422

(56) Entgegenhaltungen:
- EP-A2- 2 696 216
- WO-A1-2017/018152
- DE-A1-102015 200 224
- DE-U1-202006 005 876

## Beschreibung

### Gebiet der Erfindung

Die Erfindung betrifft einen Laserscanner für ein in einer Scanrichtung scannendes LIDAR-System und ein Verfahren zum Betreiben eines Laserscanners.

### Stand der Technik

Bei einem LIDAR-System werden Laserstrahlen in einer Scanrichtung bewegt, wie zum Beispiel in DE102015200224 A1 offenbart ist.

Quer zu der Scanrichtung sind die Laserstrahlen je zu einem Fächer aufgeweitet. Ein Laserstrahl leuchtet so einen Winkelbereich aus. Der Laserstrahl leuchtet aufgrund der Scanbewegung über die Zeit einen Streifen aus, der so breit ist, wie der Winkelbereich. Von einem Objekt zurückgeworfenes Licht der Laserstrahlen wird durch eine Empfangsoptik auf einen Sensor fokussiert. Das Licht aus einem Winkelbereich wird auf ein Sensorpixel fokussiert. Eine Auflösung des LIDAR-Systems quer zu der Scanrichtung wird durch eine Anzahl an ausgesendeten Laserstrahlen bestimmt.

### Offenbarung der Erfindung

Vor diesem Hintergrund werden mit dem hier vorgestellten Ansatz ein Verfahren zum Betreiben eines Laserscanners, sowie ein entsprechendes Computerprogrammprodukt und Maschinenlesbares Medium gemäß den unabhängigen Ansprüchen vorgestellt. Vorteilhafte Weiterbildungen und Verbesserungen des hier vorgestellten Ansatzes sind in den abhängigen Ansprüchen beschrieben.

### Vorteile der Erfindung

Ausführungsformen der vorliegenden Erfindung können in vorteilhafter Weise ermöglichen, bei näherungsweise gleich bleibendem Hardwareaufwand die Auflösung eines Laserscanners zu erhöhen, insbesondere sogar zu verdoppeln.

Es wird ein Laserscanner für ein in einer Scanrichtung scannendes LIDAR-System vorgestellt, wobei der Laserscanner eine Laserquelle aufweist, die dazu ausgebildet ist, mehrere einzelne Lichtstrahlen in eine Mehrzahl von quer zu der Scanrichtung nebeneinander angeordneten Winkelbereichen auszusenden, wobei eine Empfangsoptik des Laserscanners dazu ausgebildet ist, zurückgeworfene Anteile der ausgesendeten Lichtstrahlen auf quer zu der Scanrichtung nebeneinander angeordnete Belichtungsbereiche einer Sensorebene des Laserscanners zu konzentrieren, wobei in der Sensorebene mehrere Sensorpixel des Laserscanners quer zu der Scanrichtung nebeneinander angeordnet sind, wobei der Laserscanner dadurch gekennzeichnet ist, dass die Sensorpixel gegenüber den Belichtungsbereichen quer zu der Scanrichtung versetzt angeordnet sind, wobei eine Steuerelektronik des Laserscanners dazu ausgebildet ist, die Laserquelle so anzusteuern, dass mehreren Lichtstrahlen derart zeitlich versetzt ausgesendet werden, dass zeitgleich auf ein Sensorpixel höchstens der zurückgeworfene Anteil von einem der Lichtstrahlen trifft.

Weiterhin wird ein Verfahren zum Betreiben eines Laserscanners gemäß dem hier vorgestellten Ansatz vorgestellt, welches dadurch gekennzeichnet ist, dass in einem Schritt des Sendens die Laserquelle dazu angesteuert wird, zu einem Sendezeitpunkt einen Lichtstrahl in einen der Winkelbereiche auszusenden, wobei zurückgeworfene Anteile des ausgesendeten Lichtstrahls von der Empfangsoptik auf einen dem Winkelbereich zugeordneten Belichtungsbereich geführt werden, und in einem Schritt des Empfangens von den zwei dem Belichtungsbereich zugeordneten Sensorpixeln je ein Empfangszeitpunkt ausgelesen wird, wenn die zurückgeworfenen Anteile das jeweilige Sensorpixel treffen.

Ideen zu Ausführungsformen der vorliegenden Erfindung können unter anderem als auf den nachfolgend beschriebenen Gedanken und Erkenntnissen beruhend angesehen werden.

Ein LIDAR-System kann einen Rotor aufweisen, der den Laserscanner trägt. Der Rotor kann um eine senkrecht zu der Scanrichtung ausgerichtete Rotationsachse drehbar sein. Die Scanrichtung kann auch durch einen drehbaren Ablenkspiegel definiert sein. Die Scanrichtung kann beispielsweise im Wesentlichen horizontal sein. Die Rotationsachse kann auch um einen Winkel gegenüber der Vertikale angestellt sein. Ein Winkelbereich kann um einen Anstellwinkel schräg zu der Rotationsachse ausgerichtet sein. Die Winkelbereiche können unterschiedliche Anstellwinkel zu der Rotationsachse aufweisen. Eine Laserquelle kann beispielsweise pro Winkelbereich einen einzelnen in dem Anstellwinkel ausgerichteten schaltbaren Laser aufweisen. Ebenso kann das Licht eines einzelnen Lasers durch einen beweglichen Ablenkspiegel in die verschiedenen Winkelbereiche gelenkt werden. Das in den Winkelbereich ausgesendete Licht wird quer zu der Scanrichtung aufgefächert, um einen Streifen rund um die Rotationsachse abzutasten.

Wenn das Licht auf ein Objekt trifft, wird es gestreut und ein Anteil des Lichts in Richtung des Laserscanners zurückgeworfen. Die Empfangsoptik sammelt das zurückgeworfene Licht mit einer möglichst großen Empfangsapertur und konzentriert es pro Winkelbereich in einem Belichtungsbereich. In dem Belichtungsbereich kann ein scharfes Abbild des Winkelbereichs projiziert werden. Ebenso kann das Licht in dem Belichtungsbereich unscharf konzentriert sein. Die Empfangsoptik kann Linsen und/oder Spiegel zum Konzentrieren des Lichts aufweisen.

Beim Konzentrieren wird von einem am Rand eines Winkelbereichs angeordneten Objekt zurückgeworfenes Licht an einem Rand des zugehörigen Belichtungsbereichs konzentriert. Der Belichtungsbereich kann ortsaufgelöst erfasst werden, um eine Position des Objekts innerhalb des Winkelbereichs zu erhalten. Bei dem hier vorgestellten Ansatz wird die örtliche Auflösung durch ein Erfassen mittels Teilbereichen benachbarter Sensorpixel erreicht. Dabei wird das Licht des Belichtungsbereichs teilweise von dem einen Sensorpixel und teilweise von dem benachbarten Sensorpixel erfasst. Ein Sensorpixel wird jeweils anteilsweise von zwei nebeneinanderliegenden Belichtungsbereichen überdeckt. Die Sensorpixel können so auch von Licht der jeweils angrenzenden Belichtungsbereiche belichtet werden. Ein Sensor kann ein Reihensensor mit in einer Reihe nebeneinander angeordneten Sensorpixeln sein. Die Sensorpixel können gegenüber den Belichtungsbereichen um ein halbes Sensorpixel beziehungsweise einen halben Belichtungsbereich verschoben sein. Durch ein zeitlich versetztes Ansteuern der Laserquelle trifft auf ein Sensorpixel immer nur Licht aus einem der Belichtungsbereiche, wodurch eine räumliche Zuordnung erfolgt.

Das Verfahren kann einen Schritt des Bestimmens aufweisen, in dem unter Verwendung des Sendezeitpunkts und eines Empfangszeitpunkts des einen Sensorpixels ein erster Entfernungswert bestimmt wird. Unter Verwendung des Sendezeitpunkts und eines Empfangszeitpunkts des anderen Sensorpixels kann ein zweiter Entfernungswert bestimmt werden. So kann die Entfernung zu zwei unterschiedlichen Objekten bestimmt werden, die durch den gleichen Laser angestrahlt werden.

Die Laserquelle kann dazu angesteuert werden, zu einem weiteren Sendezeitpunkt einen weiteren Lichtstrahl in einen weiteren Winkelbereich auszusenden. Zurückgeworfene Anteile des weiteren Lichtstrahls können von der Empfangsoptik auf einen dem weiteren Winkelbereich zugeordneten weiteren Belichtungsbereich konzentriert werden. Von zwei dem weiteren Belichtungsbereich zugeordneten Sensorpixeln kann je ein weiterer Empfangszeitpunkt ausgelesen werden, wenn die zurückgeworfenen Anteile dasjeweilige Sensorpixel treffen. Der weitere Winkelbereich kann an den ersten Winkelbereich angrenzen. Dann kann einer der weiteren Empfangszeitpunkte von dem gleichen Sensorpixel eingelesen werden, wie zuvor der erste Empfangszeitpunkt. Durch die zeitliche Verschiebung kann der erste Empfangszeitpunkt eindeutig dem ersten Sendezeitpunkt und damit dem ersten Winkelbereich zugeordnet werden, während der weitere Empfangszeitpunkt eindeutig dem weiteren Sendezeitpunkt und damit dem benachbarten Winkelbereich zugeordnet werden kann. So können zwei Objekte durch dasselbe Sensorpixel aufgelöst werden.

Die Lichtstrahlen können sequenziell ausgesendet werden, während das LIDAR-System in der Scanrichtung scannt. Die Empfangszeitpunkte können sequenziell ausgelesen werden. Die Lichtstrahlen können in einer vorbestimmten Reihenfolge ausgesendet werden, während die Sensorpixel in der gleichen Reihenfolge jeweils paarweise ausgelesen werden.

Zumindest zwei Lichtstrahlen können zeitgleich in unterschiedliche Winkelbereiche ausgesendet werden. Zwischen den Winkelbereichen kann zumindest ein Winkelbereich unbeleuchtet bleiben. Durch die Lücke zwischen den Lichtstrahlen fällt auf ein Sensorpixel jeweils nur das Licht eines Lichtstrahls.

Es kann eine Sequenz aus aufeinander abfolgenden Schritten des Sendens ausgeführt werden. Dabei können in einem ersten Schritt des Sendens an einem Sequenzanfang zwischen zwei zeitgleich ausgesendeten Lichtstrahlen je drei Winkelbereiche unbeleuchtet bleiben. In zwei darauffolgenden Schritten des Sendens der Sequenz können die Lichtstrahlen um je einen Winkelbereich in die gleiche Richtung verschoben ausgesendet werden. In einem abschließenden Schritt des Sendens an einem Sequenzende kann ein einzelner Lichtstrahl um einen Winkelbereich verschoben ausgesendet werden. Durch die Sequenz und eine spezielle Verschaltung der Sensorpixel kann Auswerteelektronik eingespart werden. Dabei werden jeweils zwei durch ein dazwischenliegendes Sensorpixel voneinander beabstandete Sensorpixel durch die gleiche Auswerteelektronikeinheit ausgewertet. Durch die drei Winkelbereiche Lücke zwischen den ausgesandten Lichtstrahlen fällt entweder auf das eine Sensorpixel oder auf das andere Sensorpixel Licht.

Die Schritte der Sequenz können wiederholt werden. Durch die Sequenz ist ein schnelles Auslesen des Sensors unter Verwendung von wenig Auswerteelektronik möglich.

Von Vorteil ist auch ein Computerprogrammprodukt oder Computerprogramm mit Programmcode, der auf einem maschinenlesbaren Medium gespeichert sein kann und zur Durchführung, Umsetzung und/oder Ansteuerung der Schritte des vorstehend beschriebenen Verfahrens verwendet wird.

Es wird darauf hingewiesen, dass einige der möglichen Merkmale und Vorteile der Erfindung hierin mit Bezug auf unterschiedliche Ausführungsformen des Laserscanners oder des Verfahrens beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Seitenansicht eines Laserscanners gemäß einem Ausführungsbeispiel;
Fig. 2 zeigt eine Draufsicht auf einen Laserscanner gemäß einem Ausführungsbeispiel;
Fig. 3 zeigt Darstellungen von versetzten Belichtungsbereichen auf einem Sensor eines Laserscanners gemäß einem Ausführungsbeispiel; und
Fig. 4 zeigt Darstellungen von versetzten Belichtungsbereichen auf einem Sensor eines Laserscanners und eine Verschaltung zum Auswerten des Sensors eines Laserscanners gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

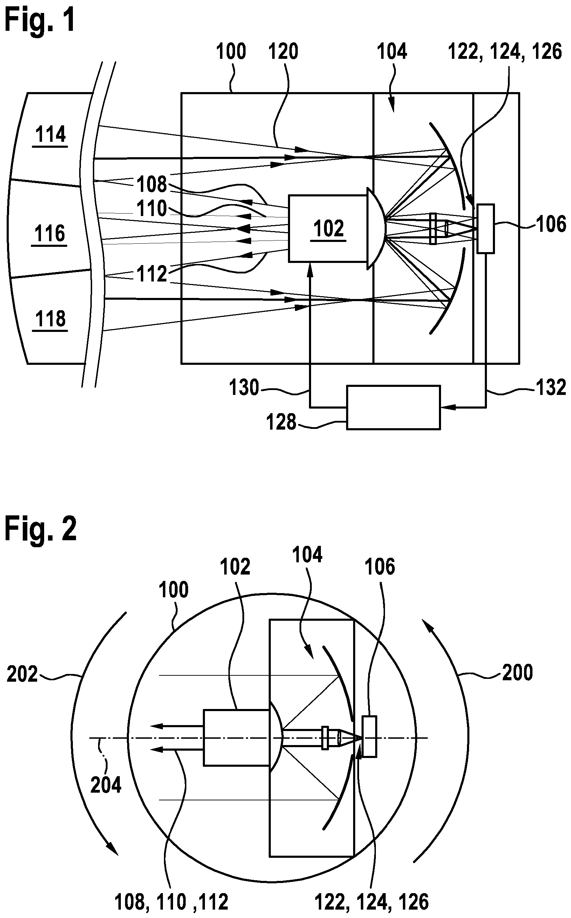

Fig. 1 zeigt eine Seitenansicht eines Laserscanners 100 gemäß einem Ausführungsbeispiel. Der Laserscanner 100 weist eine Laserquelle 102, eine Empfangsoptik 104 und einen Sensor 106 auf. Der Laserscanner 100 ist hier vereinfacht dargestellt. Die Laserquelle 102 ist hier dazu ausgebildet, drei aufgefächerte Laserstrahlen 108, 110, 112 in unterschiedliche Winkelbereiche 114, 116, 118 auszusenden. Hier ist der erste Laserstrahl 108 in den ersten Winkelbereich 114 gerichtet. Der zweite Laserstrahl 110 ist in den zweiten Winkelbereich 116 gerichtet. Der dritte Laserstrahl 112 ist in den dritten Winkelbereich 118 gerichtet.

Wenn das Licht eines der Laserstrahlen 108, 110, 112 auf ein Objekt trifft, wird es gestreut. Ein Anteil des gestreuten Lichts wird zu dem Laserscanner 100 zurückgeworfen. Die Empfangsoptik 104 empfängt das zurückgeworfene Licht 120 und konzentriert es auf dem Sensor 106 in Belichtungsbereichen 122, 124, 126. Dabei kommt im ersten Belichtungsbereiche 122 das Licht 120 aus dem ersten Winkelbereich 114 an. Im zweiten Belichtungsbereich 124 kommt das Licht 120 aus dem zweiten Winkelbereich 116 an. Im dritten Belichtungsbereich 126 kommt das Licht 120 aus dem dritten Winkelbereich 118 an.

Die Empfangsoptik 104 ist hier eine Spiegeloptik in Kombination mit optischen Linsen. Ein konkaver Hohlspiegel konzentriert das zurückgeworfene Licht 120 auf einen zentral angeordneten konvexen Spiegel. Von dem konvexen Spiegel gelangt das zurückgeworfene Licht 120 durch eine zentrale Öffnung im Hohlspiegel und ein Linsensystem zu dem Sensor 106. Hier ist die Laserquelle 102 auf einer Rückseite des konvexen Spiegels angeordnet und damit koaxial zu dem Sensor 106 ausgerichtet.

Der Sensor 106 ist ein Zeilensensor und weist hier vier in einer Reihe nebeneinander angeordnete Sensorpixel auf. Die Sensorpixel sind so groß, wie die Belichtungsbereiche 122, 124, 126. Die Sensorpixel sind gegenüber den Belichtungsbereichen 122, 124, 126 um ein halbes Pixel beziehungsweise um einen halben Belichtungsbereich 122, 124, 126 verschoben, sodass ein Belichtungsbereich 122, 124, 126 immer durch zwei Sensorpixel erfasst wird.

Eine Steuerelektronik 128 des Laserscanners 100 ist mit dem Sensor 106 und der Laserquelle 102 verbunden. Die Steuerelektronik 128 steuert die Laserquelle 102 über Steuersignale 130 an. Dabei wird die Laserquelle 102 so angesteuert, dass auf ein Sensorpixel des Sensors 106 immer nur das Licht eines Laserstrahls 108, 110, 112 fällt. Die Steuerelektronik 128 liest auch den Sensor 106 aus. Dabei werden Empfangszeitpunkte 132 ausgelesen, an denen das Licht 120 auf dem jeweilige Sensorpixel registriert wird.

Da ein Sendezeitpunkt des betreffenden Laserstrahls 108, 110, 112 bekannt ist, kann unter Verwendung der Lichtgeschwindigkeit und eines Empfangszeitpunkts 132 die Entfernung zwischen dem Laserscanner 100 und einem Reflexionspunkt des Lichts 120 bestimmt werden.

Mit anderen Worten zeigt Fig. 1 einen Laserscanner 100 für ein LIDAR-System, bei dem eine Sendeeinheit 102 des Laserscanners 100 dazu ausgebildet ist, n Laserstrahlen 108, 110, 112 als in einer Fächerrichtung aufgefächerten Strahlenfächer in einen Erfassungsbereich des Laserscanners 100 zu senden, wobei eine Empfangseinheit 106 des Laserscanners 100 n+1 in der Fächerrichtung nebeneinander angeordnete Sensorpixel aufweist, und eine Empfangsoptik 104 des Laserscanners 100 dazu ausgebildet ist, Abbilder 122, 124, 126 von Trefferflächen der Laserstrahlen 108, 110, 112 auf je einen Übergang zwischen zwei der Sensorpixel zu fokussieren.

Die Empfangsoptik 104 ist hier exemplarisch mit einem Spiegelsystem ausgeführt. Die Sendeoptik 102 besteht aus n vertikalen Ebenen bzw. Sendeeinheiten. Das zurückkommende Licht 120 wird durch die Empfangsoptik 104 auf die Detektorebene abgebildet. Der Detektor 106 besteht aus n+1 Teilen bzw. Pixeln, welche alle individuell auswertbar sind.

Fig. 2 zeigt eine Draufsicht auf einen Laserscanner 100 gemäß einem Ausführungsbeispiel. Der Laserscanner 100 entspricht im Wesentlichen dem Laserscanner in Fig. 1. Hier ist eine Drehbewegung 200 des Laserscanners dargestellt. Der ganze Laserscanner 100 wird dabei um eine Rotationsachse gedreht. Durch die Drehbewegung 200 bewegen sich die Laserstrahlen 108, 110, 112 in einer Scanrichtung 202. Die Laserstrahlen 108, 110, 112 sind quer zu der Scanrichtung 202 aufgefächert. Die Anordnung der Laserquelle 102, der Empfangsoptik 104 und des Sensors 106 ist hier rotationssymmetrisch zu einer optischen Achse 204 der Empfangsoptik 104.

Bei dem hier vorgestellten Laserscanner 100 kann ein Verfahren zum Betreiben gemäß einem Ausführungsbeispiel ausgeführt werden. Das Verfahren weist einen Schritt des Sendens, einen Schritt des Auslesens und einen Schritt des Bestimmens auf.

Im Schritt des Sendens wird zu einem ersten Sendezeitpunkt ein erster Laserstrahl 108 in einen Erfassungsbereich des Laserscanners 100 gesendet. Zu einem nachfolgenden zweiten Sendezeitpunkt wird ein in eine vom Laserstrahl 108 verschiedene Richtung zeigender zweiter Laserstrahl 110 in den Erfassungsbereich gesendet.

Im Schritt des Auslesens werden nach dem ersten Sendezeitpunkt ein erster Ansprechzeitpunkt eines ersten Sensorpixels und ein zweiter Ansprechzeitunkt eines benachbarten zweiten Sensorpixels auf ein auf einen ersten Übergang zwischen dem ersten Sensorpixel und dem zweiten Sensorpixel fokussierten ersten Abbild 122 einer durch den ersten Laserstrahl 108 beleuchteten ersten Trefferfläche ausgelesen. Nach dem zweiten Sendezeitpunkt werden ein dritter Ansprechzeitpunkt des zweiten Sensorpixels und ein vierter Ansprechzeitunkt eines benachbarten dritten Sensorpixels auf ein auf einen zweiten Übergang zwischen dem zweiten Sensorpixel und dem dritten Sensorpixel fokussierten zweiten Abbilds 124 einer durch den zweiten Laserstrahl 110 beleuchteten zweiten Trefferfläche ausgelesen.

Im Schritt des Bestimmens werden unter Verwendung des ersten Sendezeitpunkts und des ersten Ansprechzeitpunkts ein erster Entfernungswert zu einem ersten Teilbereich der ersten Trefferfläche und unter Verwendung des ersten Sendezeitpunkts und des zweiten Ansprechzeitpunkts ein zweiter Entfernungswert zu einem zweiten Teilbereich der ersten Trefferfläche bestimmt. Unter Verwendung des zweiten Sendezeitpunkts und des dritten Ansprechzeitpunkts wird ein dritter Entfernungswert zu einem dritten Teilbereich der zweiten Trefferfläche bestimmt. Unter Verwendung des zweiten Sendezeitpunkts und des vierten Ansprechzeitpunkts wird ein vierter Entfernungswert zu einem vierten Teilbereich der zweiten Trefferfläche bestimmt.

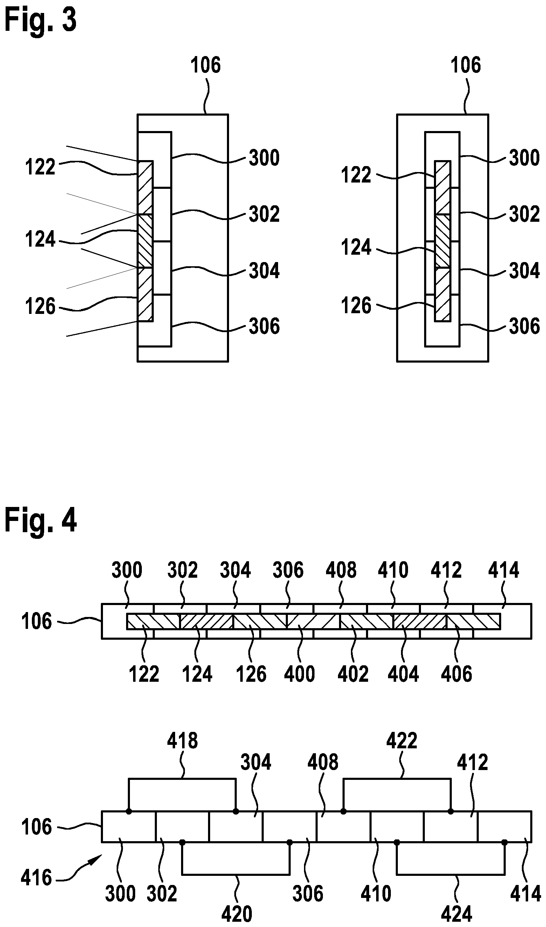

Fig. 3 zeigt Darstellungen von versetzten Belichtungsbereichen 122, 124, 126 auf einem Sensor 106 eines Laserscanners gemäß einem Ausführungsbeispiel. Der Sensor 106 entspricht dabei im Wesentlichen dem Sensor in den Figuren 1 und 2. Auch hier ist der Sensor 106 stark vereinfacht mit lediglich vier Sensorpixeln 300, 302, 304, 306 dargestellt. Die Sensorpixel 300, 302, 304, 306 sind in einer Reihe direkt nebeneinander angeordnet.

Die Belichtungsbereiche 122, 124, 126 sind jeweils so breit, wie ein Pixel. Die Sensorpixel 300, 302, 304, 306 sind um eine halbe Pixelbreite gegenüber den Belichtungsbereichen 122, 124, 126 versetzt. Die Mitte eines Belichtungsbereichs liegt auf einem Übergang zwischen einem oberen Sensorpixel und einem unteren Sensorpixel. Damit fällt das Licht aus einer oberen Hälfte eines Belichtungsbereichs auf einen unteren Bereich des oberen Sensorpixels. Das Licht aus einer unteren Hälfte des Belichtungsbereichs fällt auf eine obere Hälfte des unteren Sensorpixels.

Um keine doppelte Belichtung eines der Pixel 300, 302, 304, 306 zu verursachen, wird von der Laserquelle gleichzeitig maximal jeder zweite Winkelbereich ausgeleuchtet. Die dazwischenliegenden Winkelbereiche verbleiben unbeleuchtet und werden zeitlich nachfolgend ausgeleuchtet.

Mit anderen Worten wird in Fig. 3 die Verwendung einer Interlace Technik zur Vereinfachung der Sende- und Empfangseinheit eines LIDAR-Systems gezeigt.

Lidarsensoren können zur Realisierung hochautomatisierter Fahrfunktionen verwendet werden. Zur Abdeckung großer horizontaler Erfassungswinkel zwischen 150° und 360° können mechanische Laserscanner verwendet werden. Bei einem Drehspiegel-Laserscanner dreht sich ein motorgetriebener Ablenkspiegel. Dadurch ist ein maximaler Erfassungsbereich auf etwa 150° beschränkt. Bei Laserscannern mit größeren Erfassungsbereichen bis zu 360° befinden sich alle elektrooptischen Komponenten auf einem motorgetriebenen Drehteller oder Rotor.

LIDAR-Systeme können als Einzellinsensysteme aufgebaut werden. Bei einem Einzellinsensystem ist für die vertikale Auflösung typischerweise für jeweils einen Laser eine Lawinenfotodiode (APD) vorgesehen. So werden für ein solches System mit 16 vertikalen Ebenen 16 Laser benötigt, die auf 16 Lawinenfotodioden (APDs) abgebildet werden.

Durch den hier vorgestellten Ansatz kann bei einem LIDAR-Sensor mit geringem Aufwand eine Erhöhung der Zahl der Ebenen erreicht werden. Dabei wird durch eine geeignete Wahl von n Lasern mit n+1 Detektoren 300, 302, 304, 306 ein System mit 2xn Ebenen ermöglicht. Durch eine zusätzliche Verschaltung der Detektoren 300, 302, 304, 306 untereinander kann weiterhin Auswertungselektronik eingespart werden.

Mit anderen Worten wird durch geeignete Wahl der Laserzahl in Verbindung mit einer geeigneten Zahl der Detektoren 300, 302, 304, 306 eine einfache Erhöhung der Auflösung erreicht.

Durch den hier vorgestellten Ansatz kann eine große Zahl an elektronischen Komponenten eingespart werden. Eine zusätzliche Unterscheidung des auf einen Detektor 300, 302, 304, 306 fallenden Lichts 122, 124, 126 von verschiedenen Lasern ist erforderlich. Dies kann entweder durch ein zeitlich getrenntes Aktivieren der Laser oder eine sonstige geeignete Maßnahme bewerkstelligt werden. So kann eine einfache Verdopplung der Auflösung, eine Einsparung von Auswerte-Elektronik, eine kostengünstige Realisierung einer vertikalen Auflösungsanforderung und eine Einsparung von elektronischen Komponenten erreicht werden.

In Fig. 3 ist dies für ein System für n=3 dargestellt. Werden für den dargestellten Fall mit n=3 die Sendeeinheiten zu verschiedenen Zeiten aktiviert, so kann durch ein solches System die Auflösung auf sechs Ebenen erweitert werden. Damit der gesamte Ablauf nicht zu viel Zeit in Anspruch nimmt, können dabei die erste und dritte Sendeeinheit gleichzeitig aktiviert werden, danach kann die zweite Sendeeinheit aktiviert werden.

Fig. 4 zeigt Darstellungen von versetzten Belichtungsbereichen 122, 124, 126, 400, 402, 404, 406 auf einem Sensor 106 eines Laserscanners und eine Verschaltung zum Auswerten des Sensors 106 eines Laserscanners gemäß einem Ausführungsbeispiel. Der Sensor 106 entspricht im Wesentlichen dem Sensor in Fig. 3. Im Gegensatz dazu weist der Sensor 106 hier acht Sensorpixel 300, 302, 304, 306, 408, 410, 412, 414 auf. Wie in Fig. 3 sind die Sensorpixel 300, 302, 304, 306, 408, 410, 412, 414 um ihre halbe Breite versetzt zu den Belichtungsbereichen 122, 124, 126, 400, 402, 404, 406 angeordnet. So kann jeder Belichtungsbereich 122, 124, 126, 400, 402, 404, 406 mit zwei, jeweils zwei benachbarten Sensorpixeln 300, 302, 304, 306, 408, 410, 412, 414 zugeordneten Teilbereichen aufgelöst werden.

Der Sensor 106 wird in einem Ausführungsbeispiel mit einer einfachen Auswerteschaltung 416 ausgelesen. Dabei sind jeweils zwei der Sensorpixel 300, 302, 304, 306, 408, 410, 412, 414 zusammen mit einer Auswerteeinheit verbunden. Somit kann der ganze Sensor 106 unter Verwendung von nur vier Auswerteeinheiten 418, 420, 422, 424 ausgelesen werden. Das erste Sensorpixel 300 und das dritte Sensorpixel 304 werden von der ersten Auswerteeinheit 418 ausgelesen. Das zweite Sensorpixel 302 und das vierte Sensorpixel 306 werden von der zweiten Auswerteeinheit 420 ausgelesen. Das fünfte Sensorpixel 408 und das siebte Sensorpixel 412 werden von der dritten Auswerteeinheit 422 ausgelesen. Das sechste Sensorpixel 410 und das achte Sensorpixel 414 werden von der vierten Auswerteeinheit 424 ausgelesen.

Zeitgleich können die Auswerteeinheiten 418, 420, 422, 424 jeweils nur ein Sensorpixel 300, 302, 304, 306, 408, 410, 412, 414 auswerten. Daher werden hier zeitgleich die Belichtungsbereiche 122, 124, 126, 402, 404, 406 bis auf den vierten Belichtungsbereich 400 sequenziell paarweise belichtet, wodurch zeitgleich jeweils vier der Sensorpixel 300, 302, 304, 306, 408, 410, 412, 414 teilweise belichtet werden. Der vierte Belichtungsbereich 400 wird einzeln belichtet und das vierte und fünfte Sensorpixel 306, 408 durch die zweite und vierte Auswerteeinheit 420, 422 ausgelesen. Anschließend beginnt die Sequenz von vorne.

Mit anderen Worten sind in einem ersten Zeitschlitz der erste Laser und der fünfte Laser aktiv und Licht kann im ersten Belichtungsbereich 122 von dem ersten Sensorpixel 300 und dem zweiten Sensorpixel 302 sowie im fünften Belichtungsbereich 402 von dem fünften Sensorpixel 408 und dem sechsten Sensorpixel 410 empfangen werden. Das erste Sensorpixel 300 wird durch die erste Auswerteeinheit 418 ausgewertet. Das zweite Sensorpixel 302 wird von der zweiten Auswerteeinheit 420 ausgewertet. Das fünfte Sensorpixel 408 wird durch die dritte Auswerteeinheit 422 ausgewertet. Das sechste Sensorpixel 410 wird von der vierten Auswerteeinheit 424 ausgewertet.

In einem zweiten Zeitschlitz sind der zweite Laser und der sechste Laser aktiv. Licht kann im zweiten Belichtungsbereich 124 von dem zweiten Sensorpixel 302 und dem dritten Sensorpixel 304 empfangen werden. Im sechsten Belichtungsbereich 404 kann Licht von dem sechsten Sensorpixel 410 und dem siebten Sensorpixel 412 empfangen werden. Das zweite Sensorpixel 302 wird von der zweiten Auswerteeinheit 420 ausgewertet. Das dritte Sensorpixel 304 wird durch die erste Auswerteeinheit 418 ausgewertet. Das sechste Sensorpixel 410 wird von der vierten Auswerteeinheit 424 ausgewertet. Das siebte Sensorpixel wird durch die dritte Auswerteeinheit 422 ausgewertet.

In einem dritten Zeitschlitz sind der dritte Laser und der siebte Laser aktiv. Licht kann im dritten Belichtungsbereich 126 von dem dritten Sensorpixel 304 und dem vierten Sensorpixel 306 empfangen werden. Im siebten Belichtungsbereich kann Licht von dem siebten Sensorpixel 412 und dem achten Sensorpixel 414 empfangen werden. Das dritte Sensorpixel 304 wird durch die erste Auswerteeinheit 418 ausgewertet. Das vierte Sensorpixel 306 wird von der zweiten Auswerteeinheit 420 ausgewertet. Das siebte Sensorpixel wird durch die dritte Auswerteeinheit 422 ausgewertet. Das achte Sensorpixel 414 wird von der vierten Auswerteeinheit 424 ausgewertet.

In einem vierten Zeitschlitz ist der vierte Laser aktiv. Licht kann im vierten Belichtungsbereich 400 durch das vierte Sensorpixel 306 und das fünfte Sensorpixel 408 empfangen werden. Das vierte Sensorpixel 306 wird von der zweiten Auswerteeinheit 420 ausgewertet. Das fünfte Sensorpixel 408 wird durch die dritte Auswerteeinheit 422 ausgewertet.

Eine Vereinfachung der Auswerteelektronik eines solchen Systems kann durch eine geeignete Kopplung der Detektoreinheiten 300, 302, 304, 306, 408, 410, 412, 414 erreicht werden. Exemplarisch ist dies hier für ein System mit n=7 Sendeeinheiten dargestellt. Das dargestellte System weist eine Auflösung von 2xn=14 Ebenen auf.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Laserscanners (100) für ein in einer Scanrichtung (202) scannendes LIDAR-System, wobei der Laserscanner (100) eine Laserquelle (102) aufweist, die dazu ausgebildet ist, mehrere einzelne Lichtstrahlen (108, 110, 112) in eine Mehrzahl von quer zu der Scanrichtung (202) nebeneinander angeordneten Winkelbereichen (114, 116, 118) auszusenden, wobei eine Empfangsoptik (104) des Laserscanners (100) dazu ausgebildet ist, zurückgeworfene Anteile (120) der ausgesendeten Lichtstrahlen (108, 110, 112) auf quer zu der Scanrichtung (202) nebeneinander angeordnete Belichtungsbereiche (122, 124, 126) einer Sensorebene des Laserscanners (100) zu konzentrieren, wobei in der Sensorebene mehrere Sensorpixel (300, 302, 304, 306) des Laserscanners (100) quer zu der Scanrichtung (202) nebeneinander angeordnet sind, wobei die Sensorpixel (300, 302, 304, 306) gegenüber den Belichtungsbereichen (122, 124, 126) quer zu der Scanrichtung (202) versetzt angeordnet sind, wobei eine Steuerelektronik (128) des Laserscanners (100) dazu ausgebildet ist, die Laserquelle (102) so anzusteuern, dass mehreren Lichtstrahlen (108, 110, 112) derart zeitlich versetzt ausgesendet werden, dass zeitgleich auf ein Sensorpixel (300, 302, 304, 306) höchstens der zurückgeworfene Anteil (120) von einem der Lichtstrahlen (108, 110, 112) trifft, **dadurch gekennzeichnet, dass** in einem Schritt des Sendens die Laserquelle (102) dazu angesteuert wird, zu einem Sendezeitpunkt einen Lichtstrahl (108, 110, 112) in einen der Winkelbereiche (114, 116, 118) auszusenden, wobei zurückgeworfene Anteile (120) des ausgesendeten Lichtstrahls (108, 110, 112) von der Empfangsoptik (104) auf einen dem Winkelbereich (114, 116, 118) zugeordneten Belichtungsbereich (122, 124, 126) geführt werden, und in einem Schritt des Empfangens von den zwei dem Belichtungsbereich (122, 124, 126) zugeordneten Sensorpixeln (300, 302, 304, 306) je ein Empfangszeitpunkt (132) ausgelesen wird, wenn die zurückgeworfenen Anteile (120) das jeweilige Sensorpixel (300, 302, 304, 306) treffen.

2. Verfahren gemäß Anspruch 1, mit einem Schritt des Bestimmens, in dem unter Verwendung des Sendezeitpunkts und eines Empfangszeitpunkts (132) des einen Sensorpixels (300, 302, 304, 306) ein erster Entfernungswert bestimmt wird, und in dem unter Verwendung des Sendezeitpunkts und eines Empfangszeitpunkts (132) des anderen Sensorpixels (300, 302, 304, 306) ein zweiter Entfernungswert bestimmt wird.

3. Verfahren gemäß einem der Ansprüche 1 oder 2, in dem im Schritt des Sendens die Laserquelle (102) dazu angesteuert wird, zu einem weiteren Sendezeitpunkt einen weiteren Lichtstrahl (108, 110, 112) in einen weiteren Winkelbereich (114, 116, 118) auszusenden, wobei zurückgeworfene Anteile (120) des weiteren Lichtstrahls (108, 110, 112) von der Empfangsoptik (104) auf einen dem weiteren Winkelbereich (114, 116, 118) zugeordneten weiteren Belichtungsbereich (122, 124, 126) konzentriert werden, wobei im Schritt des Empfangens von zwei dem weiteren Belichtungsbereich (122, 124, 126) zugeordneten Sensorpixeln (300, 302, 304, 306) je ein Empfangszeitpunkt (132) ausgelesen wird, wenn die zurückgeworfenen Anteile (120) das jeweilige Sensorpixel (300, 302, 304, 306) treffen.

4. Verfahren gemäß Anspruch 3, bei dem im Schritt des Sendens die Lichtstrahlen (108, 110, 112) sequenziell ausgesendet werden, während das LIDAR-System in der Scanrichtung (202) scannt, wobei im Schritt des Empfangens die Empfangszeitpunkte (132) sequenziell ausgelesen werden.

5. Verfahren gemäß einem der Ansprüche 1 bis 4, bei dem im Schritt des Sendens zumindest zwei Lichtstrahlen (108, 110, 112) zeitgleich in unterschiedliche Winkelbereiche (114, 116, 118) ausgesendet werden, wobei zwischen den Winkelbereichen (114, 116, 118) zumindest ein Winkelbereich (114, 116, 118) unbeleuchtet bleibt.

6. Verfahren gemäß Anspruch 5, bei dem eine Sequenz aus aufeinander abfolgenden Schritten des Sendens ausgesendet wird, wobei in einem ersten Schritt des Sendens an einem Sequenzanfang zwischen zwei zeitgleich ausgesendeten Lichtstrahlen (108, 110, 112) je drei Winkelbereiche (114, 116, 118) unbeleuchtet bleiben, und in zwei darauffolgenden Schritten des Sendens der Sequenz die Lichtstrahlen (108, 110, 112) um je einen Winkelbereich (114, 116, 118) in die gleiche Richtung verschoben ausgesendet werden, wobei in einem abschließenden Schritt des Sendens an einem Sequenzende ein einzelner Lichtstrahl (108, 110, 112) um einen Winkelbereich (114, 116, 118) verschoben ausgesendet wird.

7. Verfahren gemäß Anspruch 6, bei dem die Schritte der Sequenz wiederholt werden.

8. Computerprogrammprodukt, das dazu eingerichtet ist, das Verfahren gemäß einem der Ansprüche 1 bis 7 auszuführen, umzusetzen und/oder anzusteuern.

9. Maschinenlesbares Medium, auf dem das Computerprogrammprodukt gemäß Anspruch 8 gespeichert ist.

## Claims

1. Method for operating a laser scanner (100) for a LIDAR system scanning in a scanning direction (202), wherein the laser scanner (100) has a laser source (102), which is embodied to emit a plurality of individual light beams (108, 110, 112) in a plurality of angle regions (114, 116, 118) arranged next to one another transversely to the scanning direction (202), wherein a reception optical unit (104) of the laser scanner (100) is embodied to concentrate reflected components (120) of the emitted light beams (108, 110, 112) at exposure regions (122, 124, 126) of a sensor plane of the laser scanner (100) that are arranged next to one another transversely to the scanning direction (202), wherein a plurality of sensor pixels (300, 302, 304, 306) of the laser scanner (100) are arranged in the sensor plane next to one another transversely to the scanning direction (202), wherein the sensor pixels (300, 302, 304, 306) are arranged with an offset with respect to the exposure regions (122, 124, 126) transversely to the scanning direction (202), wherein a control electronic unit (128) of the laser scanner (100) is embodied to control the laser source (102) such that a plurality of light beams (108, 110, 112) are emitted with a temporal offset such that at most the reflected component (120) of one of the light beams (108, 110, 112) is incident on one sensor pixel (300, 302, 304, 306) at the same time, **characterized in that**, in a transmission step, the laser source (102) is controlled to emit a light beam (108, 110, 112) into one of the angle regions (114, 116, 118) at a transmission time point, wherein reflected components (120) of the emitted light beam (108, 110, 112) are guided by the reception optical unit (104) onto an exposure region (122, 124, 126) assigned to the angle region (114, 116, 118), and, in a reception step, in each case one reception time point (132) is read from the two sensor pixels (300, 302, 304, 306) that are assigned to the exposure region (122, 124, 126) when the reflected components (120) are incident on the respective sensor pixel (300, 302, 304, 306) .

2. Method according to Claim 1, including a determination step, in which a first distance value is determined using the transmission time point and a reception time point (132) of the one sensor pixel (300, 302, 304, 306), and in which a second distance value is determined using the transmission time point and a reception time point (132) of the other sensor pixel (300, 302, 304, 306).

3. Method according to either of Claims 1 and 2, in which, in the transmission step, the laser source (102) is controlled to emit a further light beam (108, 110, 112) in a further angle region (114, 116, 118) at a further transmission time point, wherein reflected components (120) of the further light beam (108, 110, 112) are concentrated by the reception optical unit (104) onto a further exposure region (122, 124, 126), which is assigned to the further angle region (114, 116, 118), wherein, in the reception step, in each case one reception time point (132) is read from two sensor pixels (300, 302, 304, 306) that are assigned to the further exposure region (122, 124, 126) when the reflected components (120) are incident on the respective sensor pixel (300, 302, 304, 306).

4. Method according to Claim 3, in which, in the transmission step, the light beams (108, 110, 112) are sequentially transmitted while the LIDAR system scans in the scanning direction (202), wherein, in the reception step, the reception time points (132) are read sequentially.

5. Method according to one of Claims 1 to 4, in which, in the transmission step, at least two light beams (108, 110, 112) are emitted into different angle regions (114, 116, 118) at the same time, wherein at least one angle region (114, 116, 118) between the angle regions (114, 116, 118) remains unilluminated.

6. Method according to Claim 5, in which a sequence of successive transmission steps is emitted, wherein, in a first transmission step, at the start of the sequence, between two light beams (108, 110, 112) emitted at the same time, in each case three angle regions (114, 116, 118) remain unilluminated, and, in two following transmission steps of the sequence, the light beams (108, 110, 112) are emitted displaced by in each case one angle region (114, 116, 118) in the same direction, wherein, in a final transmission step, at the end of the sequence, an individual light beam (108, 110, 112) is emitted displaced by one angle region (114, 116, 118).

7. Method according to Claim 6, in which the steps of the sequence are repeated.

8. Computer program product, which is configured to carry out, implement and/or control the method according to one of Claims 1 to 7.

9. Machine-readable medium, on which the computer program product according to Claim 8 is stored.

## Revendications

1. Procédé permettant de faire fonctionner un scanner laser (100) pour un système LIDAR balayant dans une direction de balayage (202), le scanner laser (100) présentant une source laser (102) qui est réalisée pour émettre plusieurs faisceaux lumineux individuels (108, 110, 112) dans une pluralité de plages angulaires (114, 116, 118) disposées les unes à côté des autres transversalement à la direction de balayage (202), une optique de réception (104) du scanner laser (100) étant réalisée pour concentrer des parts réfléchies (120) des faisceaux lumineux émis (108, 110, 112) sur des zones d'exposition (122, 124, 126) d'un plan de capteur du scanner laser (100), disposées les unes à côté des autres transversalement à la direction de balayage (202), dans lequel, dans le plan de capteur, plusieurs pixels de capteur (300, 302, 304, 306) du scanner laser (100) sont disposés les uns à côté des autres transversalement à la direction de balayage (202), les pixels de capteur (300, 302, 304, 306) étant disposés de manière décalée par rapport aux zones d'exposition (122, 124, 126) transversalement à la direction de balayage (202), une électronique de commande (128) du scanner laser (100) étant réalisée pour piloter la source laser (102) de telle sorte que plusieurs faisceaux lumineux (108, 110, 112) sont émis de manière décalée dans le temps de telle sorte qu'au maximum la part réfléchie (120) d'un des faisceaux lumineux (108, 110, 112) est incidente en même temps sur un pixel de capteur (300, 302, 304, 306),
**caractérisé en ce que** dans une étape d'émission, la source laser (102) est pilotée pour émettre à un instant d'émission un faisceau lumineux (108, 110, 112) dans l'une des plages angulaires (114, 116, 118), des parts réfléchies (120) du faisceau lumineux émis (108, 110, 112) étant guidées par l'optique de réception (104) vers une zone d'exposition (122, 124, 126) associée à la plage angulaire (114, 116, 118), et dans une étape de réception des deux pixels de capteur (300, 302, 304, 306) associés à la zone d'exposition (122, 124, 126), respectivement un instant de réception (132) est lu lorsque les parts réfléchies (120) sont incidentes sur le pixel de capteur respectif (300, 302, 304, 306).

2. Procédé selon la revendication 1, comprenant une étape de détermination dans laquelle, en utilisant l'instant d'émission et un instant de réception (132) dudit un pixel de capteur (300, 302, 304, 306), une première valeur de distance est déterminée, et dans laquelle, en utilisant l'instant d'émission et un instant de réception (132) de l'autre pixel de capteur (300, 302, 304, 306), une deuxième valeur de distance est déterminée.

3. Procédé selon l'une quelconque des revendications 1 ou 2, dans lequel, à l'étape d'émission, la source laser (102) est pilotée pour émettre à un instant d'émission supplémentaire un faisceau lumineux supplémentaire (108, 110, 112) dans une plage angulaire supplémentaire (114, 116, 118), des parts réfléchies (120) du faisceau lumineux supplémentaire (108, 110, 112) étant concentrées par l'optique de réception (104) sur une zone d'exposition supplémentaire (122, 124, 126) associée à la plage angulaire supplémentaire (114, 116, 118), dans lequel, à l'étape de réception de deux pixels de capteur (300, 302, 304, 306) associés à la zone d'exposition supplémentaire (122, 124, 126), respectivement un instant de réception (132) est lu lorsque les parts réfléchies (120) sont incidentes sur le pixel de capteur respectif (300, 302, 304, 306).

4. Procédé selon la revendication 3, dans lequel, à l'étape d'émission, les faisceaux lumineux (108, 110, 112) sont émis en séquence pendant que le système LIDAR balaie dans la direction de balayage (202), les instants de réception (132) étant lus en séquence à l'étape de réception.

5. Procédé selon l'une quelconque des revendications 1 à 4, dans lequel, à l'étape d'émission, au moins deux faisceaux lumineux (108, 110, 112) sont émis en même temps dans des plages angulaires différentes (114, 116, 118), au moins une plage angulaire (114, 116, 118) parmi les plages angulaires (114, 116, 118) restant non éclairée.

6. Procédé selon la revendication 5, dans lequel une séquence d'étapes d'émission se déroulant successivement est émise, dans lequel, dans une première étape d'émission, à un début de séquence, parmi deux faisceaux lumineux (108, 110, 112) émis en même temps, respectivement trois plages angulaires (114, 116, 118) restent non éclairées, et dans deux étapes consécutives d'émission de la séquence, les faisceaux lumineux (108, 110, 112) sont émis en étant décalés respectivement d'une plage angulaire (114, 116, 118) dans la même direction, dans lequel, dans une étape finale d'émission, à une fin de séquence, un seul faisceau lumineux (108, 110, 112) est émis en étant décalé d'une plage angulaire (114, 116, 118) .

7. Procédé selon la revendication 6, dans lequel les étapes de la séquence sont répétées.

8. Produit de programme informatique qui est conçu pour exécuter, mettre en œuvre et/ou piloter le procédé selon l'une quelconque des revendications 1 à 7.

9. Support lisible par machine sur lequel est stocké le produit de programme informatique selon la revendication 8.
